# EUROPEAN PATENT SPECIFICATION

(11) **EP 0 930 794 B1**
(45) Date of publication and mention of the grant of the patent: **21.05.2003**
(21) Application number: 97204145.3
(22) Date of filing: 31.12.1997
(51) Int. Cl.: H04Q 7/38

(54) **Transmission of channel information in a radio communication system**
Ubertragung von Kanalinformation in einem Funkübertragungssystem
Transmission des données sur des canaux dans un système de radiocommunication

(43) Date of publication of application: 21.07.1999
(73) Proprietor: TELEFONAKTIEBOLAGET L M ERICSSON (publ), 126 25 Stockholm (SE)
(72) Inventor: Van de Water, Cornelis, 7546 MD Enschede (NL)
(74) Representative: Dohmen, Johannes Maria Gerardus

(56) References cited:
- EP-A- 0 645 903
- WO-A-95/12936
- DE-C- 19 640 450
- "Radio Equipment and Systems ; Digital European Cordless Telecommunications ; Common Interface; Part 3: Medium Access Control layer ; prETS 300 175-3" July 1995 , ETSI , FRANCE XP002067494 * page 34, paragraph 5.5.2 * * page 38, paragraph 5.7 - page 40, paragraph 5.7.1.1 * * page 77 * * page 116 - page 117, paragraph 9.1.1.2 *

## Description

### Field of the Invention

The present invention relates generally to telecommunication systems and, more specifically, to a radio communication system comprising radio access units and remote radio communication units.

### Background of the Invention

In modern digital cordless radio communication systems, such as DECT (Digital Enhanced Cordless Telecommunications), a plurality of radio communication units, such as portable radio telephones, operatively connect to radio access units or radio base stations. These cordless communication systems may range from simple residential cordless telephones to business and public cordless telecommunication systems capable of serving hundreds or even thousands of cordless communication units.

A remote radio communication unit, even in an idle or standby mode, for synchronization and signalling purposes, receives and processes information transmitted by a radio access unit.

The information received by a remote radio communication unit may be either information exchanged between the radio access unit and the remote radio communication unit or information exchanged between the radio access unit and another remote radio communication unit at any of the radio communication channels of the system. In case of no ongoing communication at all, the radio access unit will continuously transmit information at one or a few of the radio communication channels, for synchronization and signalling purposes, for example. These "dummy transmissions", for capacity reasons, are suspended as soon as the radio access unit establishes a communication link with a remote radio communication unit. Reference is made to "Radio Equipment and Systems; Digital European Cordless Telecommunications; Common Interface; Part 3: Medium Access Control layer; prETS 300 175-3", July 1995, ETSI, FRANCE XP002067494.

During operation, transmission at a radio communication channel by a radio access unit may be terminated because of the end of the information exchange, or because a portable radio communication unit moves out of the range of the radio access unit, or in case of interference at the present radio communication channel.

A remote radio communication unit, receiving such radio communication channel for synchronization and signalling purposes, has to search for another active radio communication channel in order to resume reception.

To increase the likelihood that a remote radio communication unit receives a dummy transmission, German patent DE 196 40 450 teaches to position two dummy transmissions with a sufficient channel spacing.

International patent application WO 95/12936 discloses transmisson of control channel location information in a system wherein separate control channels are used, which may be located at frequencies unknown to a remote radio communication unit. This channel information is transmitted in a broadcast type mode.

Those skilled in the art will appreciate that searching or scanning for a radio transmission at another radio communication channel will increase the power consumption of the radio communication unit, in particular if such scanning has to be performed at a relatively fast rate in order not to lose synchronization or signalling information.

Loss of signalling information may result in delayed call set up or even missing of incoming calls. Further, the radio communication unit often may erroneously indicate "out of range", which is very annoying for the users of such a communication unit. As will be appreciated, increased power consumption will reduce the effective operation and standby time of a communication unit, such as a portable telephone.

### Summary of the Invention

It is an object of the present invention to provide an improved method of radio communication in a radio communication system comprising radio access units and remote radio communication units wherein, among others for synchronization purposes, the radio communication units receive information transmitted by a radio access unit.

These and other objects and advantages of the present invention are provided by a method of radio communication in a radio communication system as disclosed in the prior art publication "Radio Equipment and Systems; Digital European Cordless Telecommunications; Common Interface; Part 3: Medium Access Control layer; prETS 300 175-3", July 1995, ETSI, FRANCE XP002067494, comprising radio access units and remote radio communication units, wherein a communication link between a radio access unit and a radio communication unit is established at a radio communication channel of a plurality of available radio communication channels, and wherin channel information is transmitted by said radio access unit referring to a radio communication channel, characterized in that immediately after termination of a communication link at a radio communication channel, channel information is transmitted by the radio access unit at said radio communication channel referring to another radio communication channel at which information is transmitted.

Instead of terminating transmission at a first radio communication channel at the release of the radio link, according to the invention, channel information is transmitted at this first radio communication channel providing a remote radio communication unit information as to a second radio communication channel at which the radio link is resumed or any other radio communication channel at which the radio access unit transmits information.

By receiving and processing this channel information, a remote radio communication unit can easily switch its receiver to the radio communication channel referred to, without having to perform a time and power consuming search.

The radio communication channel referred to by the radio access unit is preferably a radio communication channel which is received, at the radio access unit, with little or non-interference and a high RSSI (Radio Signal Strength Indication) level.

In order not to reduce the overall communication capacity of the radio communication system, following a further embodiment of the method according to the invention, the transmission of channel information is limited to a maximum number of radio communication channels transmitting such channel information. That is, if the maximum number will be exceeded, transmission of channel information is successively terminated starting with the radio communication channels at which the channel information was transmitted first.

That is, priority is given to new transmissions of channel information above already ongoing transmissions of channel information.

In practice, remote radio communication units are switched to an idle or standby mode if, for a longer period, no information has been exchanged. For synchronization and signalling purposes, the remote radio communication unit periodically "wakes up" to receive a transmission by a radio access unit.

In a Time Division Multiple Access (TDMA) radio communication system, following a yet further embodiment of the method according to the invention, the channel information is transmitted during such number of frames within which a remote radio communication unit "awakes".

In particular, in a radio communication system operating under the Digital Enhanced Cordless Telecommunications (DECT) protocol the channel information according to the invention can be relatively easily implemented and transmitted as a so-callled "Dummy Bearer" (DB) comprising a so-called "Recommended Other Bearer" (ROB) message referring to another active radio communication channel available for synchronization and signalling purposes.

In order not to reduce the overall communication capacity of a radio access unit, according to an embodiment of the invention, following the release of radio communication link or also called a "Traffic Bearer" (TB), a maximum of two or three dummy bearers at a time is allowed, which dummy bearers are transmitted during a maximum of four so-called "multiframes" which equals 64 TDMA transmission frames. In DECT, a remote radio communication unit, in an idle or standby mode, awakes once in a multiframe or even once in four multiframes, if the remote communication unit is in a so-called "Low Duty Cycle" mode. By changing a radio communication channel within four multiframes, the remote radio communication unit will not loose calls or other signalling information, for example.

If a radio communication unit receives the channel information pointing to another radio communication channel, it will suspend reception at the current radio communication channel and will resume reception at the radio communication channel indicated by the channel information.

The invention provides also a radio access unit comprising transceiver means and control means for controlling transmission and reception at a plurality of radio communication channels, wherein the control means are arranged for transmitting channel information at a radio communication channel immediately after termination of a communication link at such radio communication channel.

The above-mentioned and other features and advantages of the invention are illustrated in the following description with reference to the enclosed drawings.

### Brief Description of the Drawings

Figure 1 shows, in a schematic and illustrative manner, a cordless radio telecommunications system in which the present invention can be used.

Figure 2 shows, in a schematic and illustrative manner, a digital TDMA data stream comprising data bursts or time slots.

Figure 3a shows, in a schematic and illustrative manner, a prior art method of radio communication.

Figure 3b shows, in a schematic and illustrative manner, the method of radio communication according to the invention.

Figure 4 shows a simplified block diagram of a radio access unit taking the form of a radio base station operating in accordance with the present invention.

Figure 5 shows a simplified block diagram of a radio communication unit taking the form of a radio telephone set operating in accordance with the present invention.

### Detailed Description of the Embodiments

Without the intention of limitation, the invention will now be explained by its application in a cordless radio telephone system operating under the DECT (Digital Enhanced Cordless Telecommunications) protocol. DECT is a Multi Carrier/Time Division Multiple Access/Time Division Duplex (MC/TDMA/TDD) digital radio access technique, providing 10 radio carriers, each divided into 24 time slots which serve 12 duplex communication channels, called a frame.

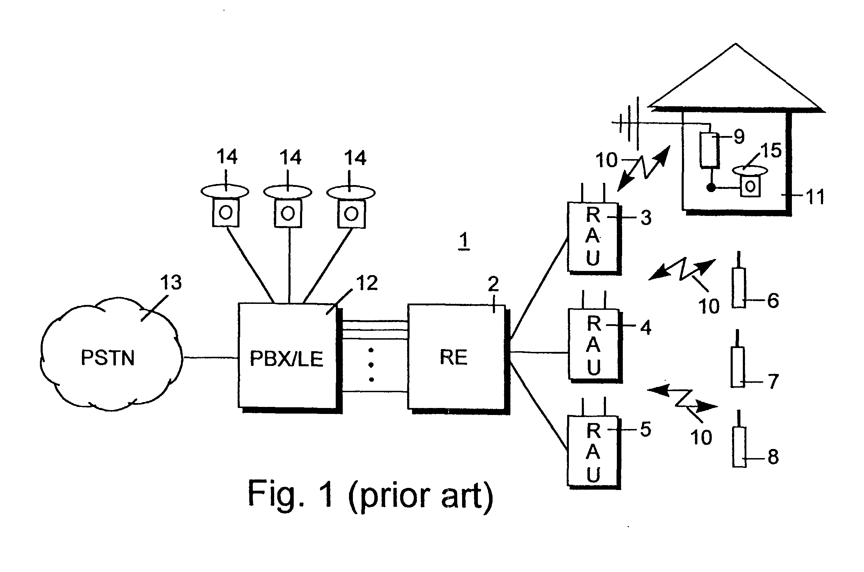

Figure 1 illustrates a typical DECT radio communication system, generally designated with reference numeral 1. The system comprises three essential elements: a Radio Exchange (RE) 2, a number of compact Radio Access Units (RAU) or radio base stations 3, 4, 5 which are installed throughout the area to be covered and connect to the RE 2, and a plurality of remote cordless of wireless radio communication units taking the form of portable radio telephones or handsets 6, 7, 8 which connect by a radio link 10 to the RAU 3, 4, 5.

Each RAU 3, 4, 5 provides service to a given area, called a cell. The RAU 3, 4, 5 are positioned such that cells surround and/or overlap each other, i.e. a so-called multi-cell approach. The radius of indoor cells amounts typically from 10 m-100 m, whereas the radius of outdoor cells typical ranges from 200 m up to 5000 m.

The radio exchange 2 connects to a wired exchange 12 providing service to a plurality of wired telephones 14. In business environments, the wired exchange 12 is generally a so-called Private Branch eXchange (PBX).

In Radio in the Local Loop (RLL) or Cordless Terminal Mobility (CTM) applications, the RE 2 connects to a Local Exchange (LE) of a public radio telecommunication network, such as the Public Switched Telephone Network (PSTN) 13, i.e. the ordinary wired public telephone network.

In RLL, the RAU 3, 4, 5 connect by a radio air link 10 to a so-called Fixed Access Units (FAU) 9 which, in fixed RLL, connects to a fixed telephone terminal or socket for the connection of an ordinary wired telephone 15. In mobile RLL, providing local mobility in the home, for example, the FAU 9 is arranged to establish a radio air link with a handset in the home 11 (not shown).

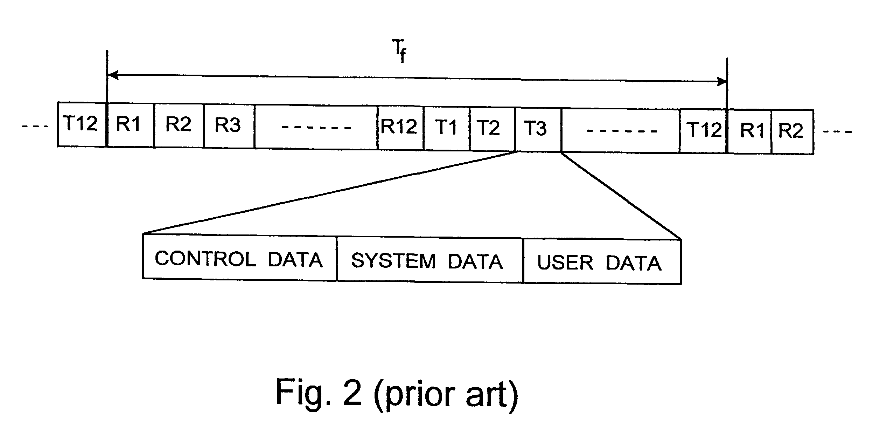

In DECT, the information over the radio air link 10 is transmitted using a frame structure shown in figure 2. During the first half of the frame, i.e. the first twelve time slots designated R1, R2,... R12, data from the RAU 3, 4, 5 are received by the remote radio communication units such as the handset 6, 7, 8 or FAU 9, whereas in the second half of each frame, i.e. the second twelve time slots designated T1, T2,... T12, the remote radio communication units transmit data to the RAU. A radio communication link between a RAU and a remote radio communication unit is assigned a time slot in the first half of the frame and a time slot bearing the same number in the second half of the frame. Each time slot or burst forms a radio communication channel and typically contains control data, system data and information or user data.

DECT does not provide a separate signalling channel. Signalling information concerning identity and access rights, service availability and, if applicable, information for handover to another radio communication channel in case of disturbances (internal handover) or transfer of a call to another radio access unit (external handover), is transmitted in the system data field of each time slot. Also paging data and call set up data are exchanged in the system data field.

The control data field contains a so-called synchronization (SYNC) word, which has to be correctly identified at a RAU and a remote radio communication unit in order to process the received data.

The information or user data is transmitted in the user data field, having a typical bit rate of 32 kb/s. A typical frame repetition time is T_{f}=10 ms.

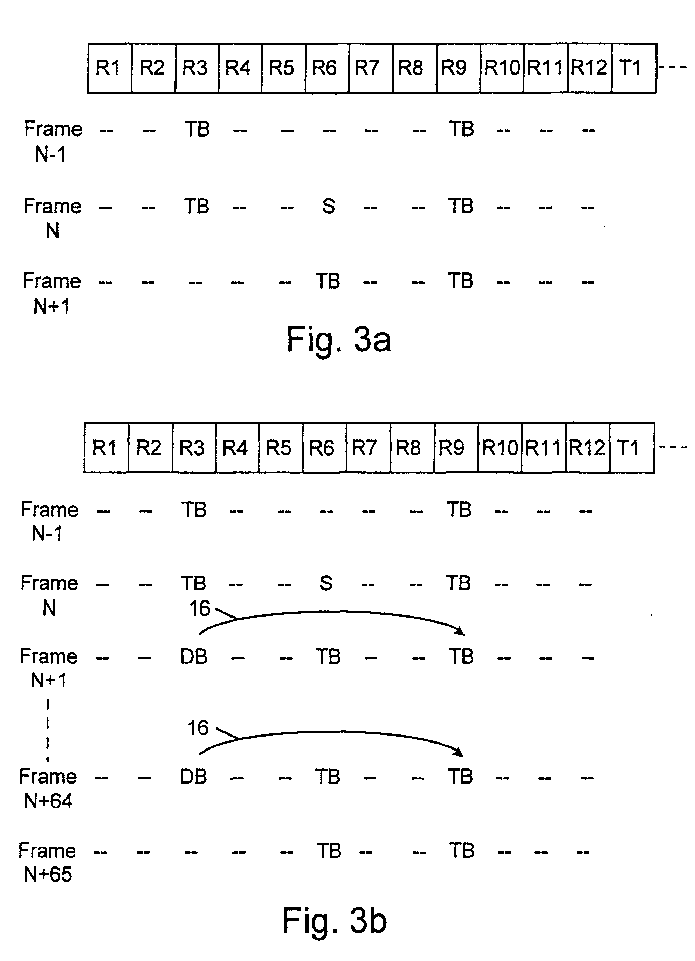

Figure 3a illustrates a present radio communication method following the DECT protocol.

For clarity purposes, only transmission from a RAU to remote radio communication units is shown, in time slots R1, R2, ... R12. See also fig. 2.

Assume a communication link or "Traffic Bearer" (TB) between RAU 4 and a remote radio communication unit 6 at time slot or radio communication channel R3, and a communication link or TB between RAU 4 and a remote radio communication unit 7 at radio communication channel R9. Further, remote communication unit 8 is assumed to listen to RAU 4 at communication channel R3 for synchronization and signalling purposes. (See also figure 1). Non-occupied radio channels are indicated by "--".

In the case of a hand over of the TB or communication link between RAU 4 and radio communication unit 6 from radio channel R3 to radio channel R6, at frame N a communication link will be set up, indicated by "S". Next, in frame N+1, transmission at radio channel or time slot R3 is terminated and resumed at radio channel or time slot R6.

Remote communication unit 8, which is receiving radio channel or time slot R3 for synchronization and signalling purposes, now has to search for another radio channel or time slot in order not to loose its connection to RAU 4. Those skilled in the art will appreciate that searching for another radio channel, in particular if to be performed at a relatively fast scanning rate, consumes battery power. Further, there is a risk that calls and other information will be missed by the remote communication unit during its search. In DECT, for example, if no information of a RAU is received, a remote communication unit will indicate an "out of range" message or signal. If such signal or message is frequently provided, the user of the radio communication unit may not justified assume malfunctioning of the radio communication unit or the system as a whole.

Figure 3b shows the improvement following the method according to the invention.

At frame N+1, while the TB at radio channel or time slot R3 is terminated and resumed at radio channel or time slot R6, a so-called "Dummy Bearer" DB is established at radio communication channel or time slot R3, providing channel information pointing to another active and available radio channel or time slot for receipt of synchronization and signalling information. As schematically indicated with an arrow (16), the DB at radio channel R3 refers to the active TB at radio channel R9.

Remote radio communication unit 8, which is receiving radio channel or time slot R3, now does not have to perform a search for another active or available TB, but can instead directly switch to the radio channel or time slot R9 as indicated by the DB at radio channel or time slot R3. Accordingly, no scarce battery power has to be used for scanning the radio links 10 and, because the actual change of radio channel can be performed in one frame, no calls or messages will be missed by the radio communication unit 8.

In DECT a radio communication unit may be in an idle or "Normal Duty Cycle" mode, wherein information is received once in a "multiframe", which equals 16 frames of 24 time slots, or in a "Low Duty Cycle" mode receiving information once in four multiframes.

Accordingly, in the preferred embodiment as shown in figure 3b, the DB established after the termination of a TB at a particular radio channel or time slot is kept for 64 frames or 4 multiframes, i.e. up to and including frame N+64.

As can be seen from figure 3b, a DB transmitted after the release of a TB at a particular communication channel prevents this channel from being used by another radio communication link or TB. In order not to overload RAU with too many DB, it is preferred to transmit not more than two or three DB at a time. In DECT, the maximum number of DB is time-related, i.e. the interval wherein DBs occur. Priority is given to "new" DB over "old" DB. In practice, this will not be a limitation because if the RAU is busy, it is very likely that a particular radio communication channel or time slot is most of the time occupied, that is it carries an active TB such that a remote communication unit can be "locked" to a particular radio channel for receiving synchronization and signalling information.

Although the invention has been illustrated with respect to a handover of an active TB at a particular radio channel or time slot to another radio channel or time slot, the channel information or DB according to the invention is transmitted each time an active TB is terminated, thus also at the end of a call, for example.

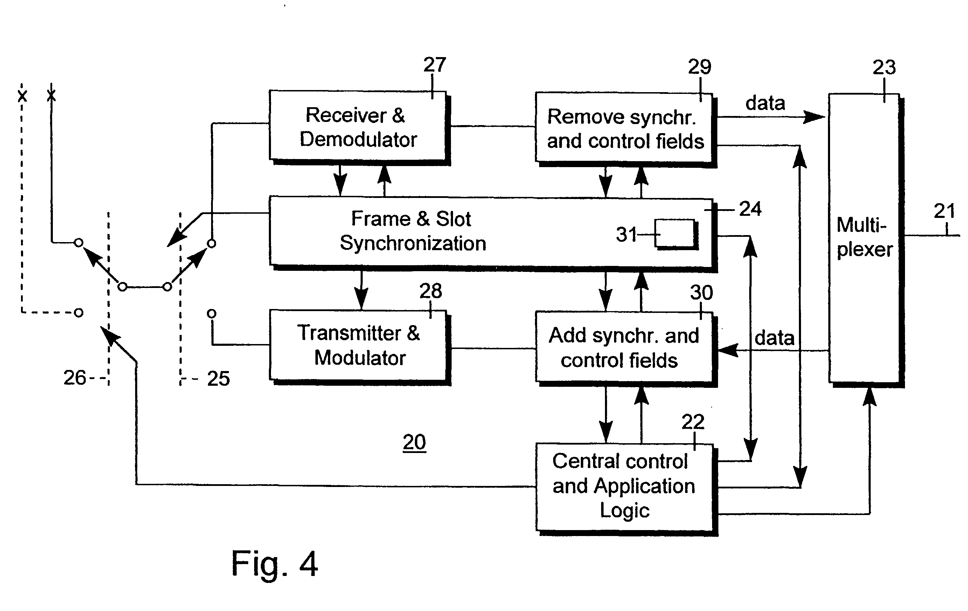

Figure 4 shows a block diagram of a RAU 20 operating in accordance with an embodiment of the present invention following the DECT protocol. The RAU 20 has a wired connection 21 to an RE 2, shown in figure 1. Central control and application logic 22 detects incoming calls and controls outgoing calls and selects suitable combination of carriers and time slots. The several connections and time slots are merged by a multiplexer 23. The RAU 20 has a frame and slot synchronization unit 24 which controls slot reception and transmission timing. The central control logic 22 also controls a Transmit/Receive (T/R) switch 25 and an antenna diversity switch 26, if antenna diversity is implemented.

The radio interface of the access unit 20 consists of a receiver/demodulator 27 and a transmitter/modulator 28. Synchronization and control information is stripped from received data by unit 29, whereas such information is added to the data to be transmitted by unit 30, connected as shown.

The frame and slot synchronization unit 24 is controlled to transmit channel information as indicated by block 31. Block 31 may be implemented in hardware and/or software.

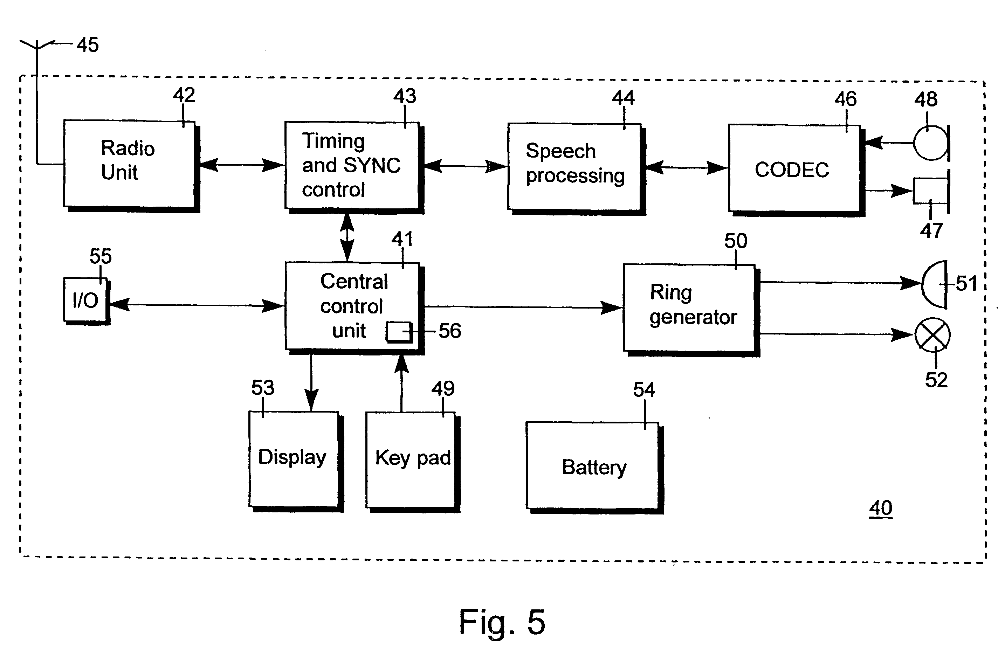

Figure 5 shows a simplified block diagram of a radio telephone set 40, arranged for switching of reception following the receipt of channel information in accordance with the present invention.

The radio telephone set 40 comprises four essential building blocks, i.e. a central control and application unit 41, a radio unit 42, a timing and synchronization (SYNC) control unit 43 and a speech processing unit 44.

The radio unit 42 comprises an air interface 45 having an antenna system coupled to a transceiver unit comprising a transmitter/modulator and a receiver/demodulator (not shown).

The timing and synchronization control unit 43 receives data over the air interface 45 and the radio unit 42. Signalling and synchronization information are removed from the received data by the unit 43 and the received speech data are fed to the speech processing unit 44. The speech processing unit 44, among others, takes care of the encryption of received data. A codec 46 decodes the received digital speech data into analog form for making it audible to a user of the handset by a loudspeaker 47 connected to the codec 46.

Speech produced by the user is received by a microphone 48 and encoded into a suitable digital format by the codec 46. This encoded speech data is fed to the speech processing unit 44. The timing and synchronization control unit 43 adds suitable synchronization and signalling information to the encrypted speech data. The radio unit 42 transmits this signalling and speech data at the air interface 45 for reception by a RAU of the communication system to which the telephone set 40 is operatively connected. (See figure 1).

The central control and application unit 41 comprises a microprocessor or microcontroller and memory means, and connects to the timing and synchronization control unit 43. The central control unit 41 essentially controls the system data and the connection with the user of the radio telephone set 40 by a keypad means 49, display means 53 and ring generator means 50, all connected to the central control unit 41. Further, an external interface 55 is provided which connects to the central control unit 41 for external control and data processing purposes. Frame and time slot allocation and, in the case of a multi-carrier, multi-time-slot technology such as DECT, also the various combinations of carrier frequencies and time slots are controlled by the central control unit 41.

The ring generator means 50 connects to a buzzer 51 or vibrator (not shown) for producing a ringing or alerting sound at the arrival of a call. Optionally, a visual alerting signal may be emitted by a lamp or Light Emitting Diode (LED) 52, connected as shown. The display means 53, such as an LCD device, are operatively connected to the central control unit 41 for displaying call information and other user and system data, such as the "Out of Range"-message.

For the overall powering of the telephone set 40 a battery and powering unit 54 is included.

The central control unit 41 is arranged to perform switching of the radio unit 42 to another radio communication channel in accordance with the channel information or DB received. To this end, the central control unit 41 is provided with suitable hardware and/or software as schematically indicated by block 56.

Although the present invention is generally illustrated with respect to DECT radio telephone communication system, it is not restricted thereto. The present invention can be used with other communication devices, such as data communication equipment as well as in other wireless multi-cell communication systems such as designated CT2 and PHS, for example.

## Claims

1. A method of radio communication in a radio communication system (1) comprising radio access units (3, 4, 5) and remote radio communication units (6, 7, 8, 9), wherein a communication link (10) between a radio access unit (3, 4, 5) and a radio communication unit (6, 7, 8, 9) is established at a radio communication channel of a plurality of available radio communication channels (R1, ..., R12; T1, ..., T12), and wherein channel information is transmitted by said radio access unit (3, 4, 5) referring to a radio communication channel, **characterized in that** immediately after termination of a communication link (10) at a radio communication channel, channel information is transmitted by said radio access unit (3, 4, 5) at said radio communication channel referring (16) to another radio communication channel at which information is transmitted.

2. A method according to claim 1, wherein the number of radio communication channels transmitting channel information simultaneously is limited to a predetermined value.

3. A method according to claim 2, wherein new transmissions of channel information receive priority above ongoing transmissions of channel information.

4. A method according to any of the previous claims, wherein information is transmitted in a Time Division Multiple Access (TDMA) mode comprising repeatedly transmitted frames of multiple burst-type communication channels (R1, ..., R12; T1, ..., T12), wherein said channel information is transmitted during a plurality of subsequent frames.

5. A method according to any of the previous claims, wherein said radio communication operates under the Digital Enhanced Cordless Telecommunications (DECT) protocol, wherein said channel information is transmitted as a so-called "Dummy Bearer" (DB) and comprises a so-called "Recommended Other Bearer" (ROB) message, wherein bearer refers to a burst-type radio communication channel.

6. A method according to claim 5, wherein the number of simultaneously operative dummy bearers (DB) is limited to a value which equals two or three.

7. A method according to claim 5 or 6, wherein a dummy bearer (DB) after termination of a radio communication channel or "Traffic Bearer" (TB) is transmitted in each frame of four multiframes and each multiframe comprises sixteen TDMA frames.

8. A method according to any of the previous claims, wherein remote radio communication units (6, 7, 8, 9) receiving said channel information at a radio communication channel, suspend reception at said radio communication channel and resume reception at a radio communication channel referred to (16) by said channel information.

9. A radio access unit (20) comprising transceiver means (27, 28) and control means (24) for controlling transmission and reception at a plurality of radio communication channels, **characterized in that** said control means (24) are arranged (31) for transmitting channel information at a radio communication channel immediately after termination of a communication link (10) at said radio communication channel referring (16) to another radio communication channel at which information is transmitted.

## Patentansprüche

1. Verfahren der Funkkommunikation in einem Funkkommunikationssystem (1), Funkzugangseinheiten (3, 4, 5) umfassend und ferne Funkkommunikationseinheiten (6, 7, 8, 9), wobei eine Kommunikationsverbindung (10) zwischen einer Funkzugangseinheit (3, 4, 5) und einer Funkkommunikationseinheit (6, 7, 8, 9) eingerichtet wird in einem Funkkommunikationskanal einer Vielzahl von verfügbaren Funkkommunikationskanälen (R1, ..., R12; T1, ..., T12), und wobei Kanalinformation bezüglich eines Funkkommunikationskanals von der Funkzugangseinheit (3, 4, 5) gesendet wird, **dadurch gekennzeichnet, dass** unmittelbar nach dem Beenden einer Kommunikationsverbindung (10) in einem Funkkommunikationskanal Kanalinformation von der Funkzugangseinheit (3, 4, 5) in dem Funkkommunikationskanal gesendet wird, bezugnehmend auf (16) auf einen anderen Funkkommunikationskanal, bei dem Information gesendet wird.

2. Verfahren nach Anspruch 1, wobei die Anzahl von Funkkommunikationskanälen, die Funkkommunikationskanalinformation simultan senden, begrenzt ist auf einen vorbestimmten Wert.

3. Verfahren nach Anspruch 2, wobei neue Sendungen von Kanalinformation Priorität erhalten über abgehende Sendungen von Kanalinformation.

4. Verfahren nach einem der vorhergehenden Ansprüche, wobei Information in einem TDMA-Modus gesendet wird, der wiederholt gesendete Rahmen von Mehrfach-Burst-Kommunikationskanälen (R1, ..., R12; T1, ..., T12) umfasst, wobei die Kanalinformation während einer Vielzahl aufeinanderfolgender Rahmen gesendet wird.

5. Verfahren nach einem der vorhergehenden Ansprüche, wobei die Funkkommunikation unter dem digitalen fortgeschrittenen Schnurlos-Telekommunikationsprotokoll (DECT) arbeitet, wobei die Kanalinformation als sogenannte "Dummy-Bearer" (DB) gesendet wird und eine sogenannte ROB-Meldung bzw. "Recommended Other Bearer"-Meldung umfasst, wobei sich Bearer auf einen Burst-artigen Kommunikationskanal bezieht.

6. Verfahren nach Anspruch 5, wobei die Anzahl simultan arbeitender Dummy-Bearer (DB) begrenzt ist auf einen Wert, der gleich Zwei oder Drei ist.

7. Verfahren nach Anspruch 5 oder 6, wobei ein Dummy-Bearer (DB) nach dem Beenden eines Funkkommunikationskanals oder "Traffic Bearers" bzw. Verkehrs-Bearers (TB) in jedem Rahmen von vier Mehrfachrahmen gesendet wird und jeder Mehrfachrahmen sechzehn TDMA-Rahmen umfasst.

8. Verfahren nach einem der vorhergehenden Ansprüche, wobei ferne Funkkommunikationseinheiten (6, 7, 8, 9), die die Kanalinformation in einem Funkkommunikationskanal empfangen, den Empfang bei diesem Funkkommunikationskanal unterbrechen und den Empfang bei einem Funkkommunikationskanal wieder aufnehmen, auf den von dieser Kanalinformation Bezug genommen wird (16).

9. Funkzugangseinheit (20), eine Sendevorrichtung (27, 28) umfassend und eine Steuervorrichtung (24) zum Steuern des Sendens und Empfangens bei einer Vielzahl von Funkkommunikationskanälen, **dadurch gekennzeichnet, dass** die Steuervorrichtung (24) eingerichtet ist (31) zum Senden von Kanalinformation auf einem Funkkommunikationskanal unmittelbar nach dem Beenden einer Kommunikationsverbindung (10) auf diesem Funkkommunikationskanal, bezugnehmend (16) auf einen anderen Funkkommunikationskanal, bei dem Information gesendet wird.

## Revendications

1. Procédé de communication par radio dans un système de communication par radio (1) comprenant des unités d'accès de radio (3, 4, 5) et des unités de communication par radio à distance (6, 7, 8, 9), dans lequel une liaison de communication (10) entre une unité d'accès de radio (3, 4, 5) et une unité de communication par radio (6, 7, 8, 9) est établie sur un canal de communication par radio d'une pluralité de canaux de communication par radio disponibles (R1, ..., R12 ; T1, ..., T12), et dans lequel une information de canal est transmise par ladite unité d'accès de radio (3, 4, 5), se référant à un canal de communication par radio, **caractérisé en ce qu'**immédiatement après l'achèvement d'une liaison de communication (10) sur un canal de communication par radio, une information de canal est transmise par ladite unité d'accès de radio (3, 4, 5) sur ledit canal de communication par radio auquel il est fait référence (16), à un autre canal de communication par radio sur lequel l'information est transmise.

2. Procédé selon la revendication 1, dans lequel le nombre de canaux de communication par radio transmettant une information de canal simultanément est limité à une valeur prédéterminée.

3. Procédé selon la revendication 2, dans lequel de nouvelles transmissions d'information de canal reçoivent une priorité par rapport à des transmissions en cours d'information de canal.

4. Procédé selon l'une quelconque des revendications précédentes, dans lequel une information est transmise selon un mode d'accès multiple par division dans le temps (TDMA), comprenant des trames transmises de façon répétée de canaux de communication du type à salves multiples (R1, ..., R12 ; T1, ..., T12), dans lequel ladite information de canal est transmise durant une pluralité de salves successives.

5. Procédé selon l'une quelconque des revendications précédentes, dans lequel ladite communication par radio fonctionne selon le protocole de télécommunications sans fil améliorées numériques (Digital Enhanced Cordless Telecommunications ou DECT), dans lequel ladite information de canal est transmise sous la forme de ce que l'on appelle une "porteuse fictive" ("Dummy Bearer" ou DB), et comprend ce que l'on appelle un message "autre porteuse recommandée" ("Recommended Other Bearer" ou ROB), dans lequel "porteuse" désigne un canal de communication par radio du type à salves.

6. Procédé selon la revendication 5, dans lequel le nombre de porteuses fictives (DB) fonctionnant simultanément est limité à une valeur qui est égale à deux ou trois.

7. Procédé selon la revendication 5 ou 6, dans lequel une porteuse fictive (DB) après l'achèvement d'un canal de communication par radio ou "une porteuse de trafic" ("Traffic Bearer" ou TB) est transmise dans chaque trame parmi quatre trames multiples, et chaque trame multiple comprend seize trames à accès multiple par division dans le temps.

8. Procédé selon l'une quelconque des revendications précédentes, dans lequel des unités de communication par radio à distance (6, 7, 8, 9) recevant ladite information de canal sur un canal de communication par radio suspendent la réception sur ledit canal de communication par radio et reprennent la réception sur un canal de communication par radio auquel il est fait référence (16) par ladite information de canal.

9. Unité d'accès de radio (20) comprenant des moyens formant émetteur/récepteur (27, 28) et des moyens de commande (24) pour commander l'émission et la réception sur une pluralité de canaux de communication par radio, **caractérisée en ce que** lesdits moyens de commande (24) sont agencés (31) pour transmettre une information de canal sur un canal de communication par radio immédiatement après l'achèvement d'une liaison de communication (10) sur ledit canal de communication par radio auquel il est fait référence (16), à un autre canal de communication par radio sur lequel l'information est transmise.
